# FASCICULE DE BREVET EUROPEEN

(11) **EP 4 030 330 B1**
(45) Date de publication et mention de la délivrance du brevet: **03.06.2026**
(21) Numéro de dépôt: 22150978.9
(22) Date de dépôt: 11.01.2022
(51) Int. Cl.: G06F 21/64, H04L 9/40, G06F 11/07, G06F 11/10, H04L 12/40, G06F 11/00

(54) **SYSTÈME DE TRANSFERT SÉCURISÉ DE DONNÉES NUMÉRIQUES D'AÉRONEF COMPRENANT DES SYSTÈMES PRODUCTEURS DE DONNÉES REDONDANTS, ENSEMBLE ET PROCÉDÉ ASSOCIÉS**
SYSTEM ZUR SICHEREN ÜBERTRAGUNG VON DIGITALEN LUFTFAHRZEUGDATEN, DAS SYSTEME ZUR ERZEUGUNG REDUNDANTER DATEN UMFASST, ENTSPRECHENDE ANORDNUNG UND ENTSPRECHENDES VERFAHREN
SYSTEM FOR SECURE TRANSFER OF DIGITAL DATA OF AN AIRCRAFT INCLUDING SYSTEMS PRODUCING REDUNDANT DATA, ASSOCIATED ASSEMBLY AND METHOD

(30) Priorité: 13.01.2021 FR 2100286
(43) Date de publication de la demande: 20.07.2022
(73) Titulaire: Dassault Aviation, 92210 Saint-Cloud (FR)
(72) Inventeur: DIGNIMONT, Patrick, 92214 SAINT CLOUD (FR); CAPPELLE, Jérôme, 92214 SAINT CLOUD (FR); BRUILLOT, Serge, 92214 SAINT CLOUD (FR)
(74) Mandataire: Lavoix

(56) Documents cités:
- WO-A1-00/08823
- FR-A1- 3 013 929
- FR-A1- 3 029 619
- US-A1- 2006 015 500
- US-A1- 2013 208 630
- N J 08405: "Avionic Data Bus Integration Technology", 1 December 1991 (1991-12-01), XP055472435, Retrieved from the Internet <URL:http://www.tc.faa.gov/its/worldpac/techrpt/ct91-19.pdf>
- ABACO SYSTEMS: "AFDX/ARINC 664 Protocol - White paper", WHITE PAPERS OF ABACO SYSTEMS, 1 January 2016 (2016-01-01), pages 1 - 22, XP055472976, Retrieved from the Internet <URL:https://www.abaco.com/system/files/files/afdx-arinc_664_protocol_a-wp-604a.pdf> [retrieved on 20180507]

## Description

La présente invention concerne un système de transfert de données d'aéronef.

FR 3013929, FR 3029619 et le document NJ08405, 'Avionic Data Bus Integration Technology' publié le 1er décembre 1991 décrivent des systèmes de transfert sécurisés de données utilisés dans des aéronefs.

Le système de transfert de données est destiné à assurer un transfert sécurisé de données numériques au sein d'un aéronef, depuis l'aéronef vers au moins un système consommateur de données extérieur à l'aéronef (tel qu'au moins un autre aéronef, une station de contrôle au sol dans le cas d'un drone, etc.), ou/et depuis un système producteur de données extérieur à l'aéronef (par exemple un autre aéronef, un système de préparation de mission, un système de téléchargement de données, etc) vers l'aéronef.

Il est destiné à être utilisé notamment entre des systèmes producteurs de données et un ou plusieurs systèmes consommateurs de données situés à distance l'un de l'autre. Le système de transfert de données est aussi utilisable au sein d'un même système avion, notamment entre différents calculateurs d'un même système avion, entre un applicatif producteur d'un équipement (par exemple un capteur) et un ou plusieurs calculateurs, entre plusieurs couches applicatives d'un même calculateur, ou encore entre des coeurs différents d'un même processeur.

Le système de transfert est destiné à être mis en œuvre indépendamment du nombre de liaisons numériques de transfert de données entre chaque système producteur de données et chaque système consommateur de données et indépendamment de la nature de celles-ci au niveau de l'architecture globale de transmission de données.

Dans un aéronef, de nombreux systèmes avions sont propres à engendrer des données fonctionnelles. Ceci est le cas par exemple des systèmes de capteurs de mesure de paramètres, les paramètres étant internes ou externes à l'aéronef, ou des systèmes avioniques, en particulier de systèmes de pilotage, de commande ou de guidage de l'aéronef.

Les données fonctionnelles sont par exemple des mesures de paramètres avion, des ordres de commande de systèmes avion, ou des données de suivi de systèmes avion.

Les données fonctionnelles sont souvent utilisées par d'autres systèmes avion, ou par d'autres couches applicatives d'un même système avion. Elles sont donc transférées entre un système producteur de données et au moins un système consommateur de **données qui** peut être situé à distance, voire à l'extérieur de l'aéronef ou dans d'autres couches applicatives.

Des protocoles de transfert de données numériques sont largement utilisés au sein des aéronefs.

Certains protocoles de « bas niveau » transmettent les données numériques sous forme de mots de données dans chacun desquels sont codés des informations de gestion du protocole et des informations fonctionnelles. Ceci est le cas par exemple du protocole ARINC 429.

Des protocoles plus évolués, tels que le protocole GAM-T-101 (Digibus), le protocole MIL-STD-1553B, ou le protocole Ethernet et ses dérivés dits déterministes (ARINC664 Part 7 ou SAE AS6802 ou TSN), mettent en œuvre des messages qui permettent l'émission atomique de plusieurs mots de données, certains contenant exclusivement des informations de gestion du protocole et les autres exclusivement des informations fonctionnelles.

Dans tous les cas, il est essentiel dans le domaine aéronautique de s'assurer de l'intégrité des données transmises.

Dans l'exemple du protocole ARINC 429, les données fonctionnelles sont transmises sous forme d'une suite de bits via des mots ARINC429, dont la taille est limitée à 32 bits.

Chaque mot ARINC 429 comporte un identificateur de données (ID) appelé label, un identifiant de la source ayant émis la donnée (SDI), les données fonctionnelles (D), et un identifiant de validité des données émises par le système producteur (SSM).

Le protocole ARINC 429 permet la transmission de données dites fonctionnelles sous la forme de motifs « label-data » et dans ce qui suit, comme communément employé, « label » pourra désigner le mot ARINC 429 complet.

Pour vérifier l'intégrité des données fonctionnelles après leur transmission, chaque mot ARINC 429 comporte un outre un bit de vérification de parité (P), résultant de la somme en binaire des bits des données fonctionnelles. Le bit de parité est calculé lors du codage des données en mots ARINC 429 dans la couche de transmission de données

Lors de la récupération des données contenues au sein d'un mot ARINC 429, le système consommateur est apte à recalculer la parité des données fonctionnelles qu'il reçoit et à vérifier qu'elle est identique à celle du bit de parité contenu dans le mot ARINC 429.

Néanmoins, ce test d'intégrité est souvent un indicateur insuffisant pour constater une perte d'intégrité du paquet de données fonctionnelles au cours du transfert.

Ainsi, si deux bits du paquet de données fonctionnelles sont erronés, la somme peut donner une parité correspondant à celle du bit de vérification, alors que le paquet de données fonctionnelles a été doublement corrompu.

Un tel protocole peut donc être utilisé lorsque les données transmises sont d'importance moindre, ou ne sont pas critiques pour la sécurité et la conduite de l'aéronef.

Si les données sont importantes ou critiques, il est nécessaire d'utiliser des systèmes producteurs redondants, qui élaborent en parallèle des données et de les transmettre en parallèle vers un ou plusieurs systèmes consommateurs. Le ou les systèmes consommateurs reçoivent les données des différents systèmes producteurs et appliquent des stratégies de sélection ou de vote, pour assurer que les données sont intègres. Une telle solution est sûre, mais augmente le coût et la complexité de l'aéronef.

En effet, la présence d'au moins deux systèmes producteurs redondants, associés à au moins deux liens de transfert redondants augmente les infrastructures requises au sein de l'aéronef, et donc la masse et le coût.

En l'absence de redondance, le système de transfert serait simplifié et moins coûteux, mais l'exigence d'intégrité des données ne serait pas remplie.

Un but de l'invention est de fournir un système de transfert de données d'aéronef, qui soit de structure simplifiée et de coût réduit, tout en garantissant l'intégrité des données dans le cas où l'erroné de ces données peut avoir des conséquences catastrophiques.

À cet effet, l'invention a pour objet un système de transfert de données selon la revendication 1.

Le système selon l'invention peut comprendre l'une ou plusieurs des caractéristiques des revendications 1 à 10 ou une des caractéristiques suivantes, prise(s) isolément ou suivant toute combinaison techniquement possible :
- la capsule de données est dans un état intègre lorsque le nouveau résultat de contrôle d'intégrité correspond au résultat de contrôle d'intégrité produit par le deuxième système producteur de données et récupéré dans la capsule de données ;
- les premières données sont des données fonctionnelles, les deuxièmes données étant des données fonctionnelles ;
- le deuxième système producteur de données est inapte à transférer directement les deuxièmes données au ou à chaque système consommateur de données.

L'invention a aussi pour objet un système consommateur de données, selon la revendication 11.

L'invention a également pour objet un procédé de transfert de données d'aéronef selon la revendication 12.

Le procédé selon l'invention peut comprendre l'une ou plusieurs des caractéristiques des revendications 13 ou 14, prise(s) isolément ou suivant toute combinaison techniquement possible.

L'invention sera mieux comprise à la lecture de la description qui va suivre, donnée uniquement à titre d'exemple, et faite en se référant aux dessins annexés, sur lesquels :
- [Fig. 1] la figure 1 est une représentation schématique d'un système de transfert de données d'aéronef selon l'invention ;
- [Fig. 2] la figure 2 est une représentation schématique du contenu d'une capsule utilisée pour transférer des données au sein du système de transfert de la figure 1 ;
- [Fig. 3] la figure 3 est une représentation schématique illustrant la structure d'une capsule émise via un protocole de transmission utilisant des mots, dans un exemple où l'identifiant et l'indicateur de rafraichissement sont placés dans le même mot ;
- [Fig. 4] la figure 4 est une vue détaillée de la représentation d'un mot du protocole ARINC 429 ;
- [Fig. 5] la figure 5 est une vue d'une représentation mémoire d'une suite de mots formant une capsule, en vue de mettre en œuvre un test d'intégrité ;

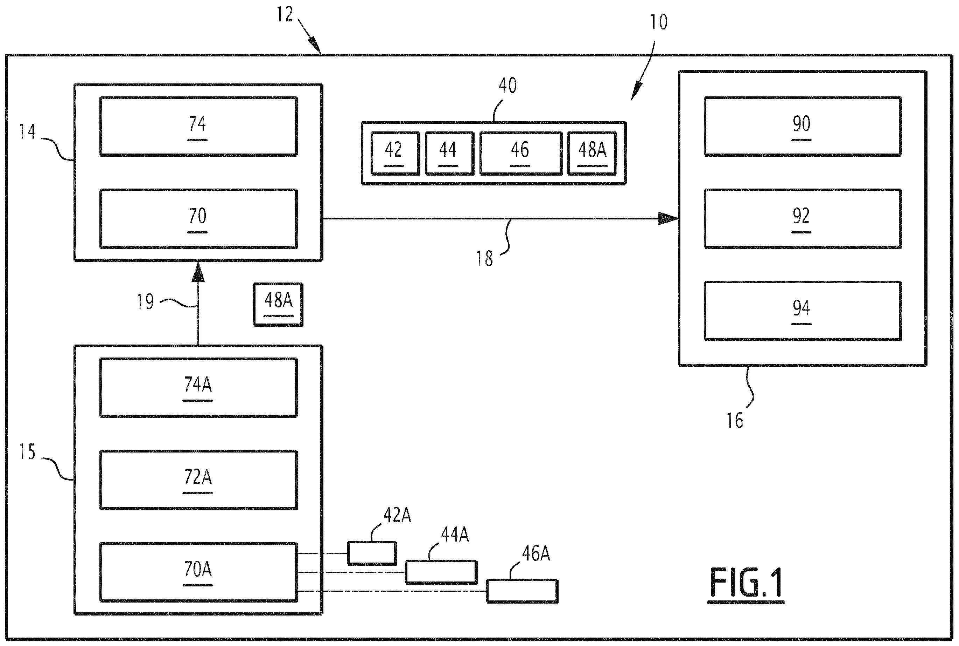

Un premier système 10 de transfert de données selon l'invention au sein d'un aéronef 12 est illustré schématiquement par la figure 1.

L'aéronef 12 est par exemple un avion d'affaires, un avion militaire, un avion de transport de passagers ou de marchandises, ou le véhicule aérien d'un drone.

Les données transférées par le système 10 sont des données fonctionnelles produites ou reçues dans l'aéronef, par exemple des résultats de mesures physiques de capteurs de l'aéronef, des données d'ordres de commande de systèmes de l'aéronef, des données de suivi d'états de systèmes de l'aéronef, des données avioniques.

Ces données fonctionnelles sont transportées et codées en binaire sous forme de chaînes de bits.

En référence à la figure 1, le système de transfert 10 comporte un premier système producteur de données 14, un deuxième système producteur de données 15, redondant du premier système producteur de données 14, et au moins un système consommateur de données 16.

Le système de transfert 10 comporte en outre un lien 18 de transfert de données entre le système producteur 14 et le ou chaque système consommateur 16. Il comprend également un lien secondaire 19 entre le premier système producteur de données 14 et le deuxième système producteur de données 15, ce lien étant par exemple une liaison de transfert de données entre le premier système producteur de données 14 et le deuxième système producteur de données 15 ou un lien de lecture de données du deuxième système producteur de données 15 par le premier système producteur de données 14.

Les systèmes producteurs de données 14, 15 et le système consommateur 16 sont par exemple respectivement présents dans deux systèmes avions distincts de l'aéronef 12. Le lien de transfert de données 18 est alors une liaison de transmission présente dans l'aéronef 12, telle qu'une liaison physique de transmission de données à travers un réseau de câbles.

En variante, au moins un système consommateur de données 16 est extérieur à l'aéronef 12. Il est par exemple situé dans un autre aéronef, une station de contrôle au sol dans le cas d'un drone, etc.

En variante encore, au moins un système producteur de données 14, 15 est extérieur à l'aéronef 12. Il est par exemple situé dans un autre aéronef, dans un système de préparation de mission, dans un système de téléchargement de données.

Dans ces deux derniers cas, le lien de transfert de données 18 comporte au moins une liaison de transmission de données sans fil depuis l'aéronef 12 ou/et vers l'aéronef 12.

Les systèmes producteurs de données 14, 15 et le système consommateur de données 16 comprennent alors chacun au moins une ressource de calcul comportant un processeur et une mémoire contenant des modules logiciels propres à être exécutés par le processeur.

En variante, les systèmes 14, 15, 16 sont réalisés au moins partiellement sous forme de composants logiques programmables, ou encore sous forme de circuits intégrés dédiés.

Dans une variante (non représentée), les systèmes producteurs de données 14, 15 et le système consommateur de données 16 sont situés au sein du même système avion, voire les systèmes producteurs de données 14 et 15 sont co-localisés dans la même ressource de calcul du système avion, par exemple au niveau de deux couches applicatives distinctes de la même ressource de calcul avion ou dans deux coeurs différents du même processeur.

Le premier système producteur de données 14 est propre à élaborer des premières données fonctionnelles à des instants successifs, en les engendrant lui-même ou en les recevant d'une ou plusieurs sources de données fonctionnelles. Il est ainsi apte à former, à chaque instant successif d'élaboration de données, un paquet de premières données fonctionnelles 46.

Le premier système producteur de données 14 est en outre propre à élaborer, un identifiant 42 de capsules de données, et un indicateur de rafraichissement 44, mis à jour par le système producteur de données 14 à chaque élaboration de premières données fonctionnelles, indépendamment de la fréquence de transmission des données dans le lien de transfert 18.

Le deuxième système producteur de données 15 est redondant et de préférence synchrone du premier système producteur de données 14. Il est propre à élaborer des deuxièmes données fonctionnelles aux mêmes instants successifs que les premières données fonctionnelles, en les engendrant lui-même, ou en les recevant de la (des) même(s) source(s) de données fonctionnelles que celle(s) reliée(s) au premier système producteur de données 14. Il est ainsi apte à former, à chaque instant successif d'élaboration de données, un deuxième paquet 46A de données fonctionnelles, destiné à être identique au premier paquet de données fonctionnelles 46, en fonctionnement normal.

Le deuxième système producteur de données 15 est en outre propre à élaborer un identifiant de capsule 42A destiné à être identique à l'identifiant de capsule 42 élaboré par le premier système producteur de données 14, et un indicateur de rafraichissement 44A, destiné à être identique à l'indicateur de rafraichissement 44 élaboré par le premier système producteur de données 14 à chaque élaboration de premières données fonctionnelles.

En outre, le deuxième système producteur de données 15 est propre à élaborer un résultat de contrôle d'intégrité, calculé à partir de l'identifiant 42A et de l'indicateur de rafraichissement 44A qu'il a élaborés, et du paquet 46A de deuxièmes données fonctionnelles.

Dans l'exemple représenté sur la figure 1, le résultat de contrôle d'intégrité 48A élaboré par le deuxième système producteur de données 15 est transféré depuis le deuxième producteur de données 15 vers le premier système producteur de données 14 à travers le lien de transfert secondaire 19.

Le premier système producteur de données 14 est alors propre à transmettre les données élaborées au système consommateur de données 16 par l'intermédiaire du lien de transfert 18, en encapsulant les premières données fonctionnelles 46 élaborées aux instants successifs dans des capsules 40 successives, dont le contenu et la structure sont illustrés respectivement par les figures 1 à 3.

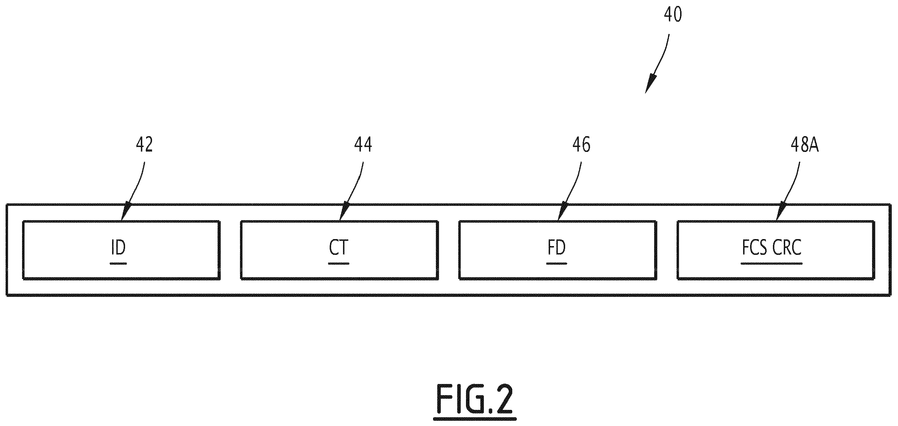

Comme illustré par la figure 2, chaque capsule 40 comporte l'identifiant de capsule 42 élaboré par le premier système producteur de données 14, un indicateur de rafraichissement 44, mis à jour par le premier système producteur de données 14 à chaque élaboration de données fonctionnelles, indépendamment de la fréquence de transmission des données dans le lien de transfert 18, et un paquet 46 de premières données fonctionnelles élaborées par le premier système producteur de données 14 lors d'une élaboration fonctionnelle de données.

Selon l'invention, chaque capsule 40 comporte en outre un résultat 48A de contrôle d'intégrité, calculé par le deuxième système producteur de données 15 à partir de l'identifiant 42A élaboré par le deuxième système producteur de données 15, à partir de l'indicateur de rafraichissement 44A élaboré par le deuxième système producteur de données 15 et du paquet de deuxièmes données fonctionnelles 46A élaboré par le deuxième système producteur de données 15 simultanément au paquet de premières données fonctionnelles 46.

L'identifiant de capsule 42, 42A est par exemple une chaine de bits permettant d'identifier le système producteur des données 14, 15 ou/et une entité ayant produit les données fonctionnelles au sein du système producteur de données 14, 15. L'identifiant de capsule 42, 42A permet notamment au ou à chaque système consommateur de données 16, à partir d'une sémantique prédéfinie ou/et d'une table de correspondance, d'identifier le producteur des données et le contenu fonctionnel du paquet de données et ainsi de mettre en œuvre un contrôle d'authentification pour s'assurer que les données ont bien été produites par le système producteur des données 14, 15 attendu.

L'identifiant de capsule 42 permet d'associer de manière bijective la capsule 40 à un système de transfert 10 considéré (mis en œuvre dans un aéronef 12, plusieurs aéronefs, un ou plusieurs aéronefs et des moyens externes à l'aéronef 12), indépendamment du nombre de liaisons de transfert 18 et de la nature de celles-ci au niveau de l'architecture globale de transmission.

Ainsi, à partir de l'identifiant de capsule 42 associé à la capsule 40, il est possible, à partir d'une sémantique prédéfinie ou/et d'une table de correspondance, d'attribuer la capsule 40 à un système de transfert 10 donné incluant des systèmes producteurs de données 14, 15 et au moins un système consommateur de données 16.

En outre, si les capsules 40 engendrées par le système producteur de données 14, 15 ou/et par une entité au sein du système producteur de données 14, 15 sont toutes de structures identiques, le système consommateur de données 16 est propre à identifier la position du paquet de données 46 dans la capsule 40, la longueur du paquet de données 46 et la position du résultat de contrôle d'intégrité 48A, à partir de l'identifiant de capsule 42.

L'indicateur de rafraichissement 44, 44A est une chaine de bits codant un numéro d'ordre d'élaboration des données fonctionnelles à chaque élaboration de données fonctionnelles. L'indicateur de rafraichissement 44, 44A par exemple un compteur ou un décompteur généralement mis à jour unitairement à chaque élaboration de données fonctionnelles. Il permet d'associer, à chaque capsule 40 transmise, une mesure de rafraîchissement des données. Cette mesure permet de s'assurer que les données **fonctionnelles** récupérées par le système consommateur de données 16 ont bien été rafraîchies par le système producteur de données 14, 15 constituant un contrôle de rafraichissement.

Le paquet de données 46, 46A est une chaine de bits codant les données fonctionnelles générées lors de l'élaboration de données fonctionnelles associée au numéro de l'indicateur de rafraichissement 44, 44A.

Le résultat de contrôle d'intégrité 48A est une chaine de bits codant un nombre de contrôle calculé par un traitement mathématique, à partir d'une représentation fonctionnelle intégrant l'identifiant 42A, l'indicateur de rafraichissement 44A, et les deuxièmes données fonctionnelles 46A élaborés par le deuxième système producteur de données 15.

De préférence, le résultat de contrôle d'intégrité 48A est le résultat d'une somme de contrôle, ou d'un code de redondance cyclique (CRC). Le traitement mathématique est par exemple un algorithme choisi en fonction des objectifs de sécurité à atteindre, de la longueur minimale/maximale du paquet de données 46A, de l'identifiant 42A, de l'indicateur de rafraichissement 44A, et de la fiabilité de la liaison de données, en terme de taux d'erreur de bits (en anglais BER, pour « Bit Error Rate »). Des exemples d'algorithmes utilisés sont décrits dans le document DOT/FA/TC-14/49 de l'Administration Fédérale d'Aviation des Etats-Unis d'Amérique, mars 2015, disponible à l'adresse suivante : https://www.faa.gov/aircraft/air_cert/design_approvals/air_software/media/TC-14-49.pdf.

Dans l'exemple représenté sur la figure 1, le lien de transfert de données 18 est une liaison mettant en œuvre un protocole de transfert de données utilisant des mots 50 contenant des informations de gestion du protocole de transmission et des informations fonctionnelles, vues de ce protocole.

Dans une variante, qui sera décrite plus bas, le lien de transfert de données 18 est une liaison mettant en œuvre un protocole de transfert de données utilisant des messages qui permettant l'émission atomique de plusieurs mots 50, certains contenant exclusivement des informations de gestion du protocole de transmission et les autres exclusivement des informations fonctionnelles, vues de ce protocole.

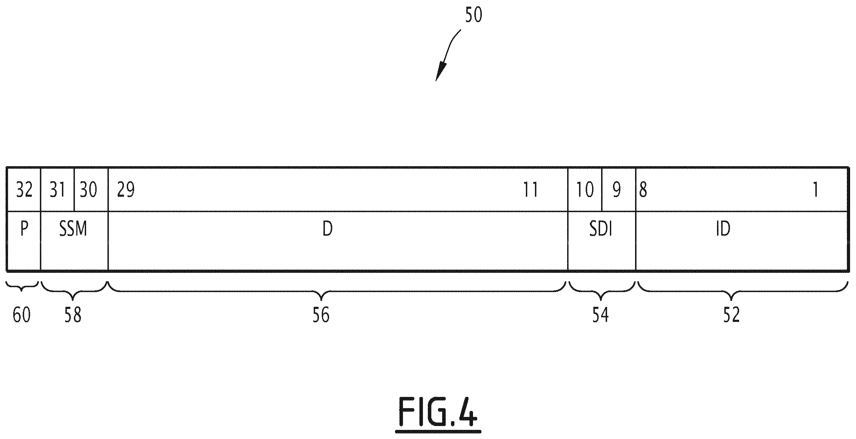

Un exemple de protocole de transfert de données utilisant des mots 50 est représenté sur la figure 4. Ce protocole est avantageusement mis en œuvre dans une liaison ARINC 429.

Chaque mot 50 est défini par une suite de bits formant un mot, présentant un nombre prédéfini de bits. Le mot 50 pour l'ARINC 429, comporte trente-deux bits.

Comme expliqué plus haut, il est communément désigné par le terme « mot ARINC 429 », voire « label ».

Le mot 50 est découpé en des champs distincts. Dans l'exemple représenté sur la figure 4, le mot 50 comporte un champ 52 d'identification du mot (ID), et avantageusement, un champ 54 d'identification du récepteur ou/et du sous-système ayant émis la donnée (champ optionnel SDI dans la norme ARINC 429). Le mot 50 comprend en outre un champ 56 contenant les données (D) transportées par le mot, un champ 58 de validité de données (SSM) ou de signe/sens (ex : +/- ou Nord/Sud, Est/Ouest), et un champ (P) de parité 60.

Le champ 52 contient une identification du mot, avec une sémantique normalisée définie lors de l'élaboration du mot.

Le champ 54 (optionnel) est destiné généralement à définir à quel récepteur de la donnée est destiné le mot, ou quel sous-système de l'émetteur a émis la donnée.

Le champ 56 contient les données devant être transmises par le mot 50. Dans cet exemple il comporte dix-neuf bits.

Le champ 58 contient un identifiant pouvant éventuellement servir de validité des données, engendré par le système producteur de données 14, permettant d'identifier si le système producteur de données 14 considère que les données sont valables ou si au contraire il considère qu'elles ne sont plus valables.

Le champ de parité 60 est d'un calcul de la somme binaire de tous les bits des champs 52, 54, 56 et 58 pour déterminer la parité de la somme.

Dans le cas où le lien de transfert 18 est une liaison mettant en œuvre des mots 50, la taille de la capsule 40 est généralement supérieure à la taille du champ 56 des données transportées par un mot 50.

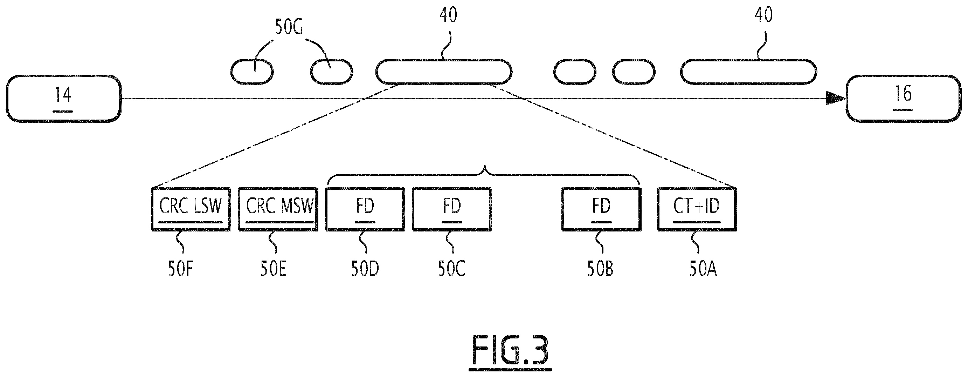

Comme illustré par la figure 3, la capsule 40 est ainsi émise sur une pluralité de mots distincts 50A à 50F en répartissant l'identifiant 42, l'indicateur de rafraichissement 44, les données fonctionnelles 46 et le résultat de contrôle d'intégrité 48A dans les champs 56 de plusieurs mots 50A à 50F.

De préférence, au moins un premier mot 50A d'identification contient l'identifiant 42 de la capsule 40 et/ou l'indicateur de rafraichissement 44. Avantageusement, le mot 50A contient à la fois l'identifiant 42 de la capsule 40, et l'indicateur de rafraichissement 44.

De préférence, pour limiter la bande passante consommée, l'identifiant 42 de la capsule 40 est formé par le champ 52 d'identification du mot 50A, et par le champ 54 d'identification du récepteur ou/et du sous-système ayant émis la donnée. Ceci est possible en établissant une table de correspondance entre chaque capsule 40 et les identifiants successifs des mots 50A à 50F utilisés pour émettre la capsule 40.

Par exemple, si chaque capsule 40 correspondant à une élaboration de données fonctionnelle est émise sur N mots 50, les N identifiants successifs des N mots 50 sont associés à la capsule 40.

L'indicateur de rafraichissement 40 est codé sous forme binaire dans le champ 56 du mot 50A, par exemple en utilisant 16 des 19 bits disponibles dans le champ 56.

Dans une variante (non représentée), le mot 50A contient l'identifiant 42 de la capsule 40, par exemple dans le champ 56 et un autre mot d'identification (non représenté) distinct du mot 50A contient l'indicateur de rafraichissement 44 dans le champ 56.

En fonction de la taille du paquet de données fonctionnelles 46 produit à chaque élaboration de données fonctionnelles, le paquet de données fonctionnelles 46 est émis sur au moins un mot de données fonctionnelles 50B à 50D, généralement sur plusieurs mots de données fonctionnelles 50B à 50D.

Les données du paquet de données fonctionnelles 46 sont réparties sur les champs 56 du ou des mots 50B à 50D qui contiennent uniquement des données fonctionnelles.

Les mots 50B à 50D de données fonctionnelles ne contiennent pas l'indicateur de rafraichissement 44 ou le résultat du test d'intégrité 48A. L'identifiant de chaque mot 50B à 50D permet d'identifier à quelle capsule 40 appartiennent les données fonctionnelles contenues dans le champ 56 du mot 50B à 50D.

Le résultat de contrôle d'intégrité 48A de chaque capsule 40 est émis sur au moins un mot de vérification d'intégrité 50E, 50F, avantageusement sur deux mots de vérification d'intégrité 50E, 50F, lorsqu'il comporte trente-deux bits, alors que le champ 56 de chaque mot 50E, 50F contient uniquement 19 bits.

La capsule 40 ainsi créée est ensuite transférée via le lien de transfert 18 en la répartissant sur plusieurs mots 50A à 50F, pour s'adapter au protocole de transfert présent dans l'aéronef 12.

A cet effet, en référence à la figure 1, le premier système producteur de données 14, comporte un module 70 d'élaboration de données fonctionnelles 46 et d'association avec un identifiant 42 de capsule 40 et avec un indicateur de rafraichissement 44, et un module 74 de mise en forme pour le transfert de données via le lien de transfert 18

Le deuxième système producteur de données 15, comporte un module 70A d'élaboration de deuxièmes données fonctionnelles 46A et d'association avec un identifiant 42A et avec un indicateur de rafraichissement 44A, les deuxièmes données fonctionnelles 46A, l'identifiant 42A et l'indicateur de rafraichissement 44A élaborés par le deuxième système producteur de données 15 étant destinées à être identiques respectivement aux premières données fonctionnelles 46, à l'identifiant 42 et à l'indicateur de rafraichissement 44 élaborés par le premier système producteur de données 14 à chaque élaboration de données.

Le deuxième système producteur de données 15, comporte en outre un module 72A de calcul d'un résultat de contrôle d'intégrité 48A, établi sur l'identifiant 42A, l'indicateur de rafraichissement 44A, et le paquet de données 46A, à chaque élaboration de données fonctionnelles, et un module 74A de mise en forme pour le transfert du résultat de contrôle d'intégrité 48A via le lien de transfert secondaire 19.

Le module d'élaboration de données 70, 70A est propre à engendrer des données fonctionnelles telles que définies plus haut, ou à récupérer des données fonctionnelles applicatives d'autres systèmes avion, via une couche applicative. Les données fonctionnelles sont élaborées à des instants successifs, sur requête ou à une fréquence d'élaboration de données fonctionnelles prédéfinie.

Les données fonctionnelles sont distinctes des données de transport (par exemple identifiant de mot) nécessaires pour mettre en œuvre le lien de transfert 18.

Le module d'élaboration de données 70, 70A est ainsi propre à créer un paquet de données fonctionnelles 46, 46A à chaque élaboration de données, de taille généralement identique pour chaque élaboration de données. Il est propre à associer à chaque paquet de données fonctionnelles 46, 46A élaboré, un identifiant 42, 42A permettant d'identifier le contenu fonctionnel du paquet de données fonctionnelles 46, 46A, son producteur, et l'appartenance du paquet de données fonctionnelles 46, 46A à une capsule 40, à l'aide d'une table de correspondance.

Comme indiqué plus haut, l'identifiant 42, 42A définit en outre avantageusement la taille de la capsule 40, la taille du paquet de données 46, 46A et la position de la somme de contrôle d'intégrité 48A, à l'aide de la table de correspondance.

Le module d'élaboration de données 70 est en outre propre à associer, à chaque élaboration fonctionnelle de données, indépendamment de la fréquence de transmission via le lien 18, un indicateur de rafraichissement 44, 44A. L'indicateur de rafraichissement 44, 44A garantit que les données transmises via le lien de transfert 18 sont bien des données valables ayant été rafraîchies. L'indicateur de rafraichissement 44, 44A est codé sur un nombre déterminé de bits par exemple compris entre 1 et 32.

Dans le cas d'un compteur incrémenté, l'indicateur de rafraichissement 44, 44A est propre à se remettre à zéro, lorsque le maximum de l'indicateur de rafraichissement a été atteint.

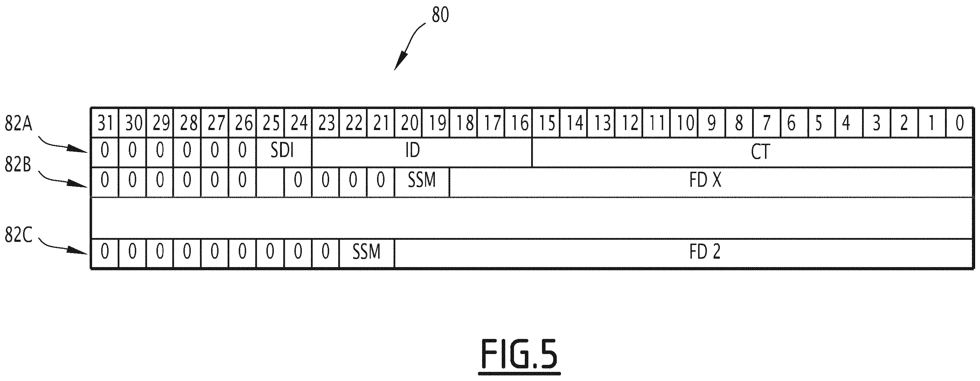

Le module de calcul d'un résultat de contrôle d'intégrité 72A est propre à élaborer une représentation mémoire 80 de l'identifiant 42A, de l'indicateur de rafraichissement 44A et du paquet de données 46A au niveau de la couche applicative, indépendamment des couches de transport. Un exemple de représentation mémoire 80 est illustré sur la figure 5. Cette représentation mémoire correspond à un transport sous forme de mots 50.

En référence à la figure 5, les bits destinés au mot 50A d'identifiant ou/et d'indicateur de rafraichissement et aux mots de données 50B à 50D sur lesquels la capsule 40 est émise sont répartis sous forme de lignes, chaque ligne correspondant à un mot (mot ARINC 429 par exemple dans le cas d'une liaison ARINC 429) dans un tableau ayant un nombre de colonnes correspondant au nombre de bits de chaque mot.

Les bits spécifiques au protocole de transmission dans chaque mot 50A à 50D sont volontairement forcés dans la représentation mémoire 80 à un bit choisi, par exemple à un bit nul.

Par exemple, sur la première ligne 82A du tableau de la représentation mémoire 80 correspondant au mot 50A d'identifiant ou/et d'indicateur de rafraichissement, seuls les bits de l'identifiant 42A et de l'indicateur de rafraichissement 44A sont conservés à leur valeur. Il en est de même pour chaque mot 50B à 50D de transport de données fonctionnelles, correspondant aux lignes 82B à 82D, dans lesquelles les bits correspondant à l'identifiant du mot, au champ SDI, et au calcul de parité, sont forcés volontairement à un bit choisi, ici un bit nul.

Seules les données fonctionnelles 46A, l'identifiant 42A et l'indicateur de rafraichissement 44A sont conservés dans la représentation mémoire 80.

Ainsi, la représentation mémoire 80 permet de tester l'intégrité de l'identifiant 42, et de l'indicateur de rafraichissement 44, provenant du premier système producteur de données 14 et reçus par le système consommateur de données 16, grâce à la première ligne 82A de la représentation, qui est représentative de l'identifiant 42A et de l'indicateur de rafraichissement 44A engendrés par le deuxième système producteur de données. La représentation mémoire 80 permet de tester également l'intégrité du paquet de données fonctionnelles 46, provenant du premier système producteur de données 14 et reçus par le système consommateur de données 16, grâce à la répartition du deuxième paquet de données fonctionnelles 46A sur les lignes 82B à 82D, en intégrant les champs 58 de validité des données.

Une fois cette représentation mémoire 80 construite, le module de calcul de résultat d'intégrité 72A est apte à mettre en œuvre un calcul de somme de contrôle, ou/et de code de redondance cyclique tels que défini plus haut.

Par exemple, pour assurer une bonne fiabilité de la vérification d'intégrité, le résultat de calcul d'intégrité 48A est obtenu par une somme de contrôle MIL-STD-1760, ou par un code de redondance cyclique CRC-32K/6.4. Le résultat de contrôle est codé, dans cet exemple, sur trente-deux bits.

Le module de mise en forme 74A du deuxième système producteur de données 15 est alors propre à transmettre le résultat de contrôle d'intégrité 48A au premier système producteur de données 14, avantageusement sous forme d'une pluralité de mots 50, comme décrit précédemment, mais pas nécessairement.

Le module de mise en forme 74 du premier système producteur de données 14 est alors propre à émettre chaque capsule 40 correspondant à une élaboration de données fonctionnelles, sous forme d'une pluralité de mots 50A à 50F, comme décrit précédemment.

Dans le cas notamment d'une liaison de type ARINC 429, les identifiants des mots 50A à 50F correspondant à une capsule donnée 40 sont générés avantageusement suivant une sémantique prédéfinie, de sorte que si les mots 50A à 50F sont émis dans le désordre, ou que d'autres mots 50G n'appartenant pas à la capsule 40 sont intercalés entre les mots 50A à 50F de la capsule 40 de manière discontinue, la capsule 40 peut être reconstituée par le système consommateur de données 16 en se fondant sur la sémantique prédéfinie.

Le système consommateur de données 16 comporte un module 90 de réception et de traitement de chaque capsule 40, un module de vérification d'intégrité 92 de la capsule 40 et un module 94 de vérification de validité des données de la capsule 40.

Le module de réception de capsules 90 est propre à reconstituer chaque capsule 40, notamment en identifiant les différents mots 50A à 50F de la capsule 40 reçus via le lien de transfert 18 via leur champ d'identification 52.

Une fois la capsule 40 reconstituée, il est propre à extraire l'identifiant 42, l'indicateur de rafraichissement 44 et le paquet de données 46 correspondant à la capsule 40.

Le module de réception de capsules 90 est propre à effectuer un contrôle d'authentification du système producteur de données 14 en vérifiant, à partir de l'identifiant 42, si les données reçues proviennent bien du système producteur de données 14 attendu.

Également à partir de l'identifiant 42 de capsule 40, et dans le cas d'une capsule 40 de taille fixe, le module de réception de capsules 90 est apte, à l'aide de la même table de correspondance que celle du système producteur de données 14, de connaître la taille de la capsule 40, la position de l'indicateur de rafraichissement 44, du paquet de données fonctionnelles 46 et du résultat de contrôle d'intégrité 48A au sein de la capsule 40.

Le module de vérification d'intégrité 92 est propre à reconstituer la même représentation mémoire 80 que celle élaborée par le deuxième système producteur de données 15, à partir des données récupérées de la capsule 40 qui ont été transférées par le lien de transfert 18.

Il est propre à appliquer le même algorithme que celui mis en oeuvre par le module de calcul de résultats d'intégrité 72A du deuxième système producteur de données 15 pour calculer un nouveau résultat de contrôle d'intégrité portant sur les données reçues, incluant l'identifiant 42, l'indicateur de rafraichissement 44 et le paquet de premières données fonctionnelles 46 engendrés par le premier système producteur de données 14 et transféré via le lien de transfert 18.

Le module de vérification d'intégrité 92 est propre à déterminer que la capsule 40 comprenant l'identifiant 42, l'indicateur de rafraichissement 44 et le paquet de données 46 est dans un état intègre, si le nouveau résultat de contrôle d'intégrité qu'il a calculé à partir des données reçues est identique au résultat de contrôle d'intégrité 48A calculé par le deuxième système producteur de données 15, extrait de la capsule 40.

Il est propre à déterminer que la capsule 40 incluant l'identifiant 42, l'indicateur de rafraichissement 44 et le paquet de données 46 est dans un état corrompu, si le nouveau résultat de contrôle d'intégrité qu'il a calculé à partir des données reçues est différent du résultat de contrôle d'intégrité 48A calculé par le deuxième système producteur de données 15.

Ainsi, il n'est pas nécessaire que le premier système producteur de données 14 élabore lui-même un résultat de contrôle d'intégrité, ni que l'identifiant 42A, l'indicateur de rafraichissement 44A et le paquet de données 46A élaborés par le deuxième système producteur de données 15 soient transmis au système consommateur de données 16.

Toute différence entre les données fonctionnelles 46, 46A, les identifiants 42, 42A, et les indicateurs de rafraichissement 44, 44A produits par le premier système producteur de données 14 et le deuxième système producteur de données 15 est détectable, puisque le nouveau résultat de contrôle d'intégrité calculé par le système consommateur de données 16 est alors différent du résultat de contrôle d'intégrité 48A calculé par le deuxième système producteur de données 15.

De même, toute corruption de données lors du transfert sur le lien de transfert 18 ou sur le lien de transfert secondaire 19 sera détectable, le nouveau résultat de contrôle d'intégrité calculé par le système consommateur de données 16 étant également différent du résultat de contrôle d'intégrité 48A calculé par le deuxième système producteur de données 15.

Cette détection d'intégrité très fiable est obtenue sans avoir à assurer une redondance complète de transfert de données entre les systèmes producteurs de données 14, 15 et le système consommateur de données. Un seul lien de transfert 18 est nécessaire pour au moins deux systèmes producteurs de données 14, 15, ce qui diminue les lignes physiques sur l'aéronef sans affecter la bande passante.

Une fois l'intégrité de l'indicateur de rafraichissement 44 confirmée, le module de vérification de validité 94 est propre à évaluer le rafraichissement des données contenues dans la capsule 40 en effectuant un contrôle de rafraichissement sur la base de l'indicateur de rafraichissement 44.

À cet effet, il est propre à comparer l'indicateur de rafraichissement 44 de chaque capsule 40 reçue à l'indicateur de rafraichissement 44 reçu d'une capsule 40 précédente pour vérifier que l'indicateur de rafraichissement 44 s'est rafraichi, par exemple en s'étant incrémenté, ou décrémenté, ou en ayant suivi une évolution attendue de rafraichissement.

Le module de vérification de validité 94 est propre par exemple à calculer l'incrément de rafraichissement entre l'indicateur de rafraichissement 44 de la capsule 40 reçue, et l'indicateur de rafraichissement 44 de la capsule 40 reçue juste avant.

Dans le cas notamment d'un compteur ou d'un décompteur, si l'incrément est unitaire en valeur absolue, le module de vérification de validité 94 est propre à déterminer que les données fonctionnelles présentes dans la capsule 40 sont bien des données rafraîchies et à placer la capsule 40 dans un état de rafraichissement attendu.

Dans le cas d'une fréquence de transmission via le lien 18 ou d'acquisition des données par le système consommateur de données 16 plus élevée que la fréquence d'élaboration des données fonctionnelles par le système producteur de données 14, le module de vérification de validité 94 est propre à autoriser un incrément de rafraichissement nul sur un nombre de capsules 40 déterminé, calculé par exemple en fonction des fréquences d'élaboration, de transmission ou d'acquisition des capsules 40.

Au-delà du nombre de capsules 40 déterminé, si l'indicateur de rafraichissement 44 reste identique, il est apte à passer la capsule 40 dans un état de rafraichissement inadéquat, car ses données n'ont pas été rafraichies.

Par ailleurs, lorsque la fréquence d'élaboration ou/et de transmission des capsules 40 est supérieure à la fréquence d'acquisition des capsules 40, le module de vérification de validité 94 est propre à autoriser un incrément d'indicateur de rafraichissement soit supérieur à un.

Dans tous les cas, le module de vérification de validité 94 est propre à mémoriser l'indicateur de rafraichissement de chaque capsule 40 venant d'être reçue, pour permettre un calcul d'incrément lors de la réception de la capsule 40 suivante.

Il est également propre à tenir compte de la mise à zéro de l'indicateur de rafraichissement 44, lorsque celui-ci atteint sa valeur maximale.

Ainsi, en fonction de l'incrément calculé entre les indicateurs de rafraichissement 44 de deux capsules 40 successives, le module de vérification de validité 94 est propre à déterminer les données fonctionnelles présentes dans la capsule 40 sont bien des données rafraîchies pouvant être utilisées par le système consommateur 16, et à passer la capsule 40 dans un état de rafraîchissement attendu. Si au contraire, les données ne sont pas rafraichies ou s'il manque des données intermédiaires non reçues, il est propre à passer la capsule 40 dans un état de rafraichissement inadéquat.

Lorsque la capsule 40 provient du système producteur de données 14, 15 attendu, qu'elle est dans l'état intègre et qu'elle est dans l'état de rafraîchissement attendu, les données fonctionnelles qu'elle contient sont considérées valides et sont alors propres à être utilisées par le système consommateur 16, ou à être transmises à un autre système avion pour être utilisées.

Lorsqu'une capsule 40 ne provient pas du système producteur de données 14 attendu, ou qu'elle est dans l'état corrompu ou encore dans un état de rafraîchissement inadéquat, le module de vérification de validité 94 est propre à exclure les données provenant de la capsule 40, qui sont considérées invalides.

Le module de vérification de validité 94 est avantageusement propre à mettre en œuvre une phase de réarmement, pendant une durée de réarmement donnée correspondant par exemple à la réinitialisation d'un calculateur ou à l'arrêt d'une panne transitoire.

Dans ce cas, dès qu'une nouvelle capsule 40 est reçue, en provenant du système producteur de données 14 attendu et en étant dans l'état intègre, le module de vérification de validité 94 est propre à mémoriser la nouvelle valeur de l'indicateur de rafraichissement 44 de cette capsule 40. Ensuite, il est propre à récupérer l'indicateur de rafraichissement 40 de chaque nouvelle capsule 40 arrivant, pour déterminer un incrément de rafraichissement. Si l'incrément de rafraichissement traduit un état de rafraichissement attendu, le module de vérification de validité 94 est propre, après la durée prédéfinie de réarmement, à passer à nouveau les capsules 40 dans l'état valide.

Dans certains cas, si la panne d'intégrité ou de rafraichissement affectant les données contenues dans les capsules 40 est battante, c'est-à-dire qu'elle se produit régulièrement ou de manière arbitraire, le module de vérification de validité 94 est propre à stopper de manière définitive le réarmement et à déclarer le système de transfert de données 10 en défaut.

En fonctionnement, le premier système producteur de données 14 et le deuxième système producteur de données 15 élaborent simultanément, par leurs modules 70, 70A d'élaboration de données fonctionnelles 46, 46A, un identifiant de capsule 42, 42A, un indicateur de rafraichissement 44, 44A mis à jour à chaque élaboration de données fonctionnelles, indépendamment de la fréquence de transmission des données dans le lien de transfert 18, et un paquet 46, 46A de données fonctionnelles. Les deuxièmes données fonctionnelles 46A, l'identifiant 42A et l'indicateur de rafraichissement 44A élaborés par le deuxième système producteur de données 15 sont destinées, en fonctionnement normal, à être identiques respectivement aux premières données fonctionnelles 46, à l'identifiant 42 et à l'indicateur de rafraichissement 44 élaborés par le premier système producteur de données 14 à chaque élaboration de données.

Puis, le module de calcul d'un résultat de contrôle d'intégrité 72A du deuxième système producteur de données 15 élabore une représentation mémoire 80 de l'identifiant 42A, de l'indicateur de rafraichissement 44A et du paquet de données 46A. Il met ensuite en œuvre un calcul de somme de contrôle, ou/et de code de redondance cyclique tels que définis plus haut, sur la représentation mémoire 80 pour obtenir un résultat de contrôle d'intégrité 48A.

Le module de mise en forme 74A du deuxième système producteur de données 15 transmet ensuite le résultat de contrôle d'intégrité 48A au premier système producteur de données 14 via le lien de transfert secondaire 19.

Le module de mise en forme 74 du premier système producteur de données 14 émet alors chaque capsule 40 correspondant à une élaboration de données fonctionnelles, de préférence sous forme d'une pluralité de mots 50A à 50F, comme décrit précédemment.

La capsule 40 comporte l'identifiant de capsule 42 élaboré par le premier système producteur de données 14, l'indicateur de rafraichissement 44, mis à jour par le premier système producteur de données 14 à chaque élaboration de données fonctionnelles, indépendamment de la fréquence de transmission des données dans le lien de transfert 18, et le paquet 46 de premières données fonctionnelles élaborées par le premier système producteur de données 14 lors d'une élaboration fonctionnelle de données.

La capsule 40 comporte en outre un résultat 48A de contrôle d'intégrité, calculé par le deuxième système producteur de données 15, comme exposé plus haut.

Après réception de la capsule 40 par le module de réception de capsules 90, le module de vérification d'intégrité 92 reconstitue la même représentation mémoire 80 que celle élaborée par le deuxième système producteur de données 15, à partir des données récupérées de la capsule 40 qui ont été transférées par le lien de transfert 18.

Il applique le même algorithme que celui mis en œuvre par le module de calcul de résultats d'intégrité 72A du deuxième système producteur de données 15 et calcule un nouveau résultat de contrôle d'intégrité portant sur les données reçues, incluant l'identifiant 42, l'indicateur de rafraichissement 44 et le paquet de premières données fonctionnelles 46 engendrés par le premier système producteur de données 14 et transféré via le lien de transfert 18.

Le module de vérification d'intégrité 92 détermine alors que la capsule 40 comprenant l'identifiant 42, l'indicateur de rafraichissement 44 et le paquet de données 46 est dans un état intègre, si le nouveau résultat de contrôle d'intégrité qu'il a calculé à partir des données reçues est identique au résultat de contrôle d'intégrité 48A calculé par le deuxième système producteur de données 15, extrait de la capsule 40.

Il détermine que la capsule 40 incluant l'identifiant 42, l'indicateur de rafraichissement 44 et le paquet de données 46 est dans un état corrompu, si le nouveau résultat de contrôle d'intégrité qu'il a calculé à partir des données reçues est différent du résultat de contrôle d'intégrité 48A calculé par le deuxième système producteur de données 15 extrait de la capsule 40.

Dans une variante, le deuxième système producteur de données 15 élabore une deuxième capsule 40A contenant l'identifiant 42A, l'indicateur de rafraichissement 44A, les deuxièmes données fonctionnelles 46A et le résultat de contrôle d'intégrité 48A. Cette deuxième capsule est transférée via la liaison de données 19 au premier système producteur de données 14. Le système producteur de données 14 émet alors les capsules 40 et 40A via la liaison de données 18 au système consommateur de données 16.

Dans ce cas, le système consommateur de données 16 effectue les vérifications précitées sur les capsules 40 et 40A, puis compare chaque donnée de la capsule 40 avec la donnée correspondante de la capsule 40A pour s'assurer qu'elles sont cohérentes (comparaison à seuil par exemple).

Si tel est le cas, les données cohérentes peuvent être utilisées par le système consommateur de données 16.

Dans une variante, non représentée, la capsule 40 est transmise à travers un protocole de transmission utilisant des messages constitués de plusieurs mots 50 consécutifs, généralement émis sous forme atomique, les uns à la suite des autres.

Généralement, au moins un mot 50 de chaque message contient juste des informations de gestion du protocole de transmission. La capsule 40 est alors répartie sur plusieurs mots 50 du même message ne contenant pas d'informations de gestion du protocole de transmission, contrairement au protocole décrit plus haut dans lequel chaque mot 50 contient des d'informations de gestion du protocole de transmission.

Un ou plusieurs mots du même message contiennent alors l'identifiant de capsule 42 et l'indicateur de rafraîchissement 44, un ou plusieurs mots du même message contiennent les données fonctionnelles 46 et un ou plusieurs mots du même message contiennent le résultat 48A de contrôle d'intégrité, calculé à partir de l'identifiant 42, de l'indicateur de rafraichissement 44 et du paquet de données 46 de la capsule 40.

Dans encore une autre variante (non représentée), chaque capsule 40 est répartie sur une pluralité de messages en répartissant l'identifiant de capsule 42, l'indicateur de rafraîchissement 44, les données fonctionnelles 46 et le résultat 48 de contrôle d'intégrité sur des mots de la pluralité de messages.

Dans une autre variante (non représentée), la capsule 40 est dépourvue de données fonctionnelles 46. La capsule 40 en tant que telle comprenant alors l'identifiant de capsule 42, l'indicateur de rafraîchissement 44, et le résultat 48A de contrôle d'intégrité portant sur l'identifiant 42A et sur l'indicateur de rafraîchissement 44A est alors l'équivalent d'un signal pour déclencher ou valider une action. La donnée transmise par la capsule 40 est alors la présence ou non de la capsule 40.

## Revendications

1. Système de transfert de données (10) d'aéronef (12), comportant :
- un premier système producteur de données (14), propre à élaborer, à des instants successifs, des premières données (46) ;
- un deuxième système producteur de données (15), redondant et de préférence synchrone du premier système producteur de données (14), le deuxième système producteur de données (15) étant propre à élaborer avantageusement aux instants successifs, des deuxièmes données (46A), destinées à être identiques aux premières données (46) ;
- au moins un système consommateur de données (16), propre à recevoir et à utiliser les premières données (46) ;
l'un au moins du premier système producteur de données (14) du deuxième système producteur de données (15) et du ou de chaque système consommateur de données (16) étant destiné à être embarqué au sein d'un aéronef (12) ;
- un lien de transfert de données (18) entre le premier système producteur de données (14) et le ou chaque système consommateur de données (16), le premier système producteur de données (14) étant propre à transférer les premières données (46) au ou à chaque système consommateur de données (16) via le lien de transfert de données (18) ;
le deuxième système producteur de données (15) étant propre à élaborer un résultat de contrôle d'intégrité (48A) portant au moins sur les deuxièmes données (46A), le résultat de contrôle d'intégrité (48A) étant destiné à être transmis au ou à chaque système consommateur de données (16),
le ou chaque système consommateur de données (16) étant propre à récupérer les premières données (46) transférées depuis le premier système producteur de données (14) et le résultat de contrôle d'intégrité (48A) élaboré par le deuxième système producteur, le ou chaque système consommateur de données (16) étant propre à contrôler l'intégrité des premières données (46), en établissant un nouveau résultat de contrôle d'intégrité à partir des premières données (46) et en comparant le nouveau résultat de contrôle d'intégrité au résultat de contrôle d'intégrité (48A) produit par le deuxième système producteur de données (15).

2. Système de transfert (10) selon la revendication 1, dans lequel le deuxième système producteur de données (15) est propre à transmettre le résultat de contrôle d'intégrité (48A) portant sur les deuxièmes données (46A) au premier système producteur de données (14), dans lequel, éventuellement, le premier système producteur de données (14) est propre à transférer le résultat de contrôle d'intégrité (48A) provenant du deuxième système producteur de données (15) à travers le lien de transfert de données (18).

3. Système de transfert (10) selon la revendication 2, dans lequel le lien de transfert de données (18) raccorde exclusivement le premier système producteur de données (14) au ou à chaque système consommateur de données (16), aucun lien de transfert de données ne raccordant le deuxième système producteur de données (15) au ou à chaque système consommateur de données (16).

4. Système de transfert (10) selon l'une quelconque des revendications 2 à 3, dans lequel le deuxième système producteur de données (15) est inapte à transférer directement les deuxièmes données (46A) au ou à chaque système consommateur de données (16) sans transiter par le premier système producteur de données (14).

5. Système de transfert (10) selon l'une quelconque des revendications précédentes, dans lequel le premier système producteur de données (14) est propre à engendrer, à chaque élaboration de données, une capsule de données (40), chaque capsule de données (40) comprenant :
- un identifiant (42) du producteur de données, un indicateur de rafraichissement (44) mis à jour à chaque élaboration de données, éventuellement un paquet de premières données fonctionnelles (46), élaborés par le premier système producteur de données (14) ; et
- le résultat de contrôle d'intégrité (48A) des données élaborées par le deuxième système producteur de données (15),
le ou chaque système consommateur de données (16) étant propre à récupérer chaque capsule de données (40) pour extraire l'identifiant (42), l'indicateur de rafraichissement (44), éventuellement le paquet de premières données fonctionnelles (46), élaborés par le premier système producteur de données (14) et le résultat de contrôle d'intégrité (48A) engendré par le deuxième système producteur de données (15).

6. Système de transfert (10) selon la revendication 5, dans lequel le deuxième système producteur de données (15) est propre à engendrer, à chaque élaboration de données, un identifiant (42A) du producteur de données destiné à être identique à l'identifiant (42) élaboré par le premier système producteur de données (14), un indicateur de rafraichissement (44A), variant à chaque élaboration de données, destiné à être identique à l' indicateur de rafraichissement (44) élaboré par le premier système producteur de données (14), le résultat de contrôle d'intégrité (48A) étant calculé à partir de l'identifiant (42A) du producteur de données, de l'indicateur de rafraichissement (44A) et éventuellement de deuxièmes données fonctionnelles (46A), élaborés par le deuxième système producteur de données (15).

7. Système de transfert (10) selon l'une quelconque des revendications 5 ou 6, dans lequel le lien de transfert (18) met en oeuvre un protocole de transfert générant des mots (50), chaque capsule de données (40) étant émise à l'aide d'une pluralité de mots (50A à 50F).

8. Système de transfert (10) selon l'une quelconque des revendications 5 à 7, dans lequel la pluralité de mots (50A à 50F) comporte : au moins un mot (50A) d'identification comprenant l'identifiant (42) et/ou l'indicateur de rafraichissement (44), éventuellement au moins un mot (50B à 50D) de données fonctionnelles contenant des premières données fonctionnelles du paquet de données fonctionnelles (46), et au moins un mot (50E, 50F) de vérification d'intégrité, contenant le résultat de contrôle d'intégrité (48A) élaboré par le deuxième système producteur de données (15).

9. Système de transfert (10) selon l'une quelconque des revendications 5 à 8, dans lequel le deuxième système producteur de données (15) est propre à élaborer le résultat de contrôle d'intégrité (48A) en adoptant une représentation mémoire (80) à partir des données à répartir dans les mots (50A à 50F) destinés à transférer la capsule de données (40), le ou chaque système consommateur de données (16) étant propre à reconstituer la représentation mémoire (80) élaborée par le système producteur de données (14) à partir des données récupérées des mots (50A à 50F) de la capsule de données (40).

10. Système de transfert (10) selon l'une quelconque des revendications précédentes, dans lequel le résultat de contrôle d'intégrité (48A) est une somme de contrôle ou un code de redondance cyclique.

11. Système consommateur de données (16), destiné à être utilisé dans un système de transfert de données (10) d'aéronef (12), le système de transfert de données (10) comportant un premier système producteur de données (14), propre à élaborer, à des instants successifs, des premières données (46) et un deuxième système producteur de données (15), redondant et de préférence synchrone du premier système producteur de données (14), le deuxième système producteur de données (15) étant propre à élaborer avantageusement aux instants successifs, des deuxièmes données (46A), destinées à être identiques aux premières données (46)
le système consommateur de données (16) étant propre à récupérer les premières données (46) transférées depuis le premier système producteur de données (14) et un résultat de contrôle d'intégrité (48A) élaboré par le deuxième système producteur portant sur les deuxièmes données (46A), le système consommateur de données (16) étant propre à contrôler l'intégrité des premières données (46), en établissant un nouveau résultat de contrôle d'intégrité à partir au moins des premières données (46) et en comparant le nouveau résultat de contrôle d'intégrité au résultat de contrôle d'intégrité (48A) produit par le deuxième système producteur de données (15).

12. Procédé de transfert de données d'aéronef (12) comprenant les étapes suivantes :
- élaboration, à des instants successifs, de premières données (46) par un premier système producteur de données (14) ;
- élaboration, avantageusement aux instants successifs, de deuxièmes données (46A), destinées à être identiques aux premières données (46) par un deuxième système producteur de données (15), redondant et de préférence synchrone du premier système producteur de données (14) ;
- transfert des premières données (46) via un lien de transfert de données (18) entre le premier système producteur de données (14) et au moins un système consommateur de données (16) ;
- réception et utilisation des premières données (46) par l'au moins un système consommateur de données (16) ;
l'un au moins du premier système producteur de données (14) du deuxième système producteur de données (15) et du ou de chaque système consommateur de données (16) étant embarqué au sein d'un aéronef (12) ;
le procédé comprenant en outre les étapes suivantes :
- élaboration par le deuxième système producteur de données (15) d'un résultat de contrôle d'intégrité (48A) portant sur les deuxièmes données (46A) ;
- transfert du résultat de contrôle d'intégrité (48A) au ou à chaque système consommateur de données (16) ;
- récupération par le ou chaque système consommateur de données (16) des premières données (46) transférées depuis le premier système producteur de données (14) et du résultat de contrôle d'intégrité (48A) élaboré par le deuxième système producteur ;
- contrôle d'intégrité des premières données (46) par le ou chaque système consommateur de données (16), en établissant un nouveau résultat de contrôle d'intégrité à partir au moins des premières données (46) et en comparant le nouveau résultat de contrôle d'intégrité au résultat de contrôle d'intégrité (48A) produit par le deuxième système producteur de données (15).

13. Procédé selon la revendication 12, dans lequel les premières données (46) élaborées par le premier système producteur de données (14) et le résultat de contrôle d'intégrité (48A) élaboré par le deuxième système producteur de données (15) sont transmis à travers le lien de transfert de données (18), les deuxièmes données (46A) élaborées par le deuxième système producteur de données (15) n'étant pas transmises directement au ou à chaque système consommateur de données (16) sans transiter par le premier système producteur de données (14).

14. Procédé selon la revendication 13, dans lequel le premier système producteur de données (14) engendre, à chaque élaboration de données, une capsule de données (40),
chaque capsule de données (40) comprenant :
- un identifiant (42) du producteur de données, un indicateur de rafraichissement (44) mis à jour à chaque élaboration de données, éventuellement un paquet de premières données fonctionnelles (46), élaborés par le premier système producteur de données (14) ; et
- le résultat de contrôle d'intégrité (48A) des données élaboré par le deuxième système producteur de données (15),
le procédé comprenant la récupération, par le ou chaque système consommateur de données (16) de chaque capsule de données (40) pour extraire l'identifiant (42), l'indicateur de rafraichissement (44), éventuellement le paquet de premières données fonctionnelles (46), élaborés par le premier système producteur de données (14) et le résultat de contrôle d'intégrité (48A) élaboré par le deuxième système producteur de données (15).

## Patentansprüche

1. Datenübertragungssystem (10) für Luftfahrzeug (12), umfassend:
- ein erstes Datenerzeugungssystem (14), das geeignet ist, um zu aufeinanderfolgenden Zeitpunkten erste Daten (46) zu erarbeiten;
- ein zweites Datenerzeugungssystem (15), redundant und vorzugsweise synchron mit dem ersten Datenerzeugungssystem (14), wobei das zweite Datenerzeugungssystem (15) geeignet ist, um zu aufeinanderfolgenden Zeitpunkten zweite Daten (46A) zu erarbeiten, die dazu bestimmt sind, mit den ersten Daten (46) identisch zu sein;
- mindestens ein Datenverbrauchersystem (16), das geeignet ist, um die ersten Daten (46) zu empfangen und zu verwenden;
wobei mindestens eines von dem ersten Datenerzeugungssystem (14) des zweiten Datenerzeugungssystems (15) und dem oder jedem Datenverbrauchersystem (16) dazu bestimmt ist, an Bord eines Luftfahrzeugs (12) zu sein;
- eine Datenübertragungsverbindung (18) zwischen dem ersten Datenerzeugungssystem (14) und dem oder jedem Datenverbrauchersystem (16), wobei das erste Datenerzeugungssystem (14) geeignet ist, um die ersten Daten (46) über die Datenübertragungsverbindung (18) an das oder jedes Datenverbrauchersystem (16) zu übertragen;
das zweite Datenerzeugungssystem (15) geeignet ist, um ein Integritätsprüfungsresultat (48A) zu erarbeiten, das sich zumindest auf die zweiten Daten (46A) bezieht, wobei das Integritätsprüfungsresultat (48A) dazu bestimmt ist, an das oder jedes Datenverbrauchersystem (16) übertragen zu werden,
das oder jedes Datenverbrauchersystem (16) geeignet ist, um die ersten Daten (46), die von dem ersten Datenerzeugungssystem (14) übertragen werden, und das Integritätsprüfungsresultat (48A), das von dem zweiten Datenerzeugungssystem erstellt wird, abzurufen, wobei das oder jedes Datenverbrauchersystem (16) geeignet ist, um die Integrität der ersten Daten (46) zu prüfen, indem ein neues Integritätsprüfungsresultat aus den ersten Daten (46) erstellt wird und indem das neue Integritätsprüfungsresultat mit dem Integritätsprüfungsresultat (48A), das von dem zweiten Datenerzeugungssystem (15) erstellt wird, verglichen wird.

2. Übertragungssystem (10) nach Anspruch 1, wobei das zweite Datenerzeugungssystem (15) geeignet ist, um das Integritätsprüfungsresultat (48A) in Bezug auf die zweiten Daten (46A) an das erste Datenerzeugungssystem (14) zu übertragen, wobei optional das erste Datenerzeugungssystem (14) geeignet ist, um das Integritätsprüfungsresultat (48A) von dem zweiten Datenerzeugungssystem (15) über die Datenübertragungsverbindung (18) zu übertragen.

3. Übertragungssystem (10) nach Anspruch 2, wobei die Datenübertragungsverbindung (18) ausschließlich das erste Datenerzeugungssystem (14) mit dem oder jedem Datenverbrauchersystem (16) verbindet, wobei keine Datenübertragungsverbindung das zweite Datenerzeugungssystem (15) mit dem oder jedem Datenverbrauchersystem (16) verbindet.

4. Übertragungssystem (10) nach einem der Ansprüche 2 bis 3, wobei das zweite Datenerzeugungssystem (15) nicht in der Lage ist, die zweiten Daten (46A) direkt an das oder jedes Datenverbrauchersystem (16) zu übertragen, ohne das erste Datenerzeugungssystem (14) zu durchlaufen.

5. Übertragungssystem (10) nach einem der vorherigen Ansprüche, wobei das erste Datenerzeugungssystem (14) geeignet ist, um bei jeder Datenerarbeitung eine Datenkapsel (40) zu erzeugen, jede Datenkapsel (40) umfassend:
- eine Kennung (42) des Datenerzeugers, einen Auffrischungsindikator (44), der bei jeder Datenerstellung aktualisiert wird, möglicherweise ein Paket erster Funktionsdaten (46), das von dem ersten Datenerzeugungssystem (14) erstellt wird; und
- das Integritätsprüfungsresultat (48A) der Daten, die von dem zweiten Datenerzeugungssystem (15) erarbeitet werden,
wobei das oder jedes Datenverbrauchersystem (16) geeignet ist, um jede Datenkapsel (40) abzurufen, um die Kennung (42), den Auffrischungsindikator (44), optional das Paket erster Funktionsdaten (46), die von dem ersten Datenerzeugungssystem (14) erarbeitet werden, und das Integritätsprüfungsresultat (48A), das von dem zweiten Datenerzeugungssystem (15) erzeugt wird, zu extrahieren.

6. Übertragungssystem (10) nach Anspruch 5, wobei das zweite Datenerzeugungssystem (15) geeignet ist, um bei jeder Datenerarbeitung eine Kennung (42A) des Datenerzeugers zu erzeugen, die dazu bestimmt ist, um mit der von dem ersten Datenerzeugungssystem (14) erarbeiteten Kennung (42) identisch zu sein, einen Auffrischungsindikator (44A), der sich bei jeder Datenerstellung ändert, der dazu bestimmt ist, mit dem von dem ersten Datenerzeugungssystem (14) erarbeiteten Auffrischungsindikator (44) identisch zu sein, wobei das Integritätsprüfungsresultat (48A) anhand der Kennung (42A) des Datenerzeugers, der Auffrischungsindikator (44A) und optional der zweiten funktionalen Daten (46A), die von dem zweiten Datenerzeugungssystem (15) erstellt werden, berechnet wird.

7. Übertragungssystem (10) nach einem der Ansprüche 5 oder 6, wobei die Verbindung (18) ein Übertragungsprotokoll implementiert, das Wörter (50) generiert, wobei jede Datenkapsel (40) mittels einer Vielzahl von Wörtern (50A à 50F) emittiert wird.

8. Übertragungssystem (10) nach einem der Ansprüche 5 bis 7, wobei die Vielzahl von Wörtern (50A bis 50F) Folgendes umfasst: mindestens ein Identifizierungswort (50A), umfassend die Kennung (42) und/oder den Auffrischungsindikator (44), optional mindestens ein Funktionsdatenwort (50B bis 50D), das erste Funktionsdaten des Funktionsdatenpakets (46) enthält, und mindestens ein Integritätsprüfungswort (50E, 50F), das das Integritätsprüfungsresultat (48A) enthält, das von dem zweiten Datenerzeugungssystem (15) erstellt wird.

9. Übertragungssystem (10) nach einem der Ansprüche 5 bis 8, wobei das zweite Datenerzeugungssystem (15) geeignet ist, um das Integritätsprüfungsresultat (48A) zu erarbeiten, indem es eine Speicherdarstellung (80) anhand der Daten annimmt, die in die Wörter (50A bis 50F) zu verteilen sind, die dazu bestimmt sind, die Datenkapsel (40) zu übertragen, wobei das oder jedes Datenverbrauchersystem (16) geeignet ist, um die Speicherdarstellung (80) zu rekonstruieren, die von dem Datenerzeugungssystem (14) anhand der aus den Wörtern (50A bis 50F) der Datenkapsel (40) abgerufenen Daten erarbeitet wird.

10. Übertragungssystem (10) nach einem der vorherigen Ansprüche, wobei das Integritätsprüfungsresultat (48A) eine Prüfsumme oder ein zyklischer Redundanzcode ist.

11. Datenverbrauchersystem (16), das dazu bestimmt ist, in einem Datenübertragungssystem (10) für Luftfahrzeug (12) verwendet zu werden, das Datenübertragungssystem (10) umfassend ein erstes Datenerzeugungssystem (14), das geeignet ist, um zu aufeinanderfolgenden Zeitpunkten erste Daten (46) zu erarbeiten, und ein zweites Datenerzeugungssystem (15), das redundant und vorzugsweise synchron zu dem ersten Datenerzeugungssystem (14) ist, wobei das zweite Datenerzeugungssystem (15) vorteilhafterweise geeignet ist, um zu aufeinanderfolgenden Zeitpunkten zweite Daten (46A) zu erarbeiten, die dazu bestimmt sind, mit den ersten Daten (46) identisch zu sein,
das Datenverbrauchersystem (16) geeignet ist, um die ersten Daten (46), die von dem ersten Datenerzeugungssystem (14) übertragen werden, und ein Integritätsprüfungsresultat (48A), das von dem zweiten Datenerzeugungssystem in Bezug auf die zweiten Daten (46A) erstellt wird, abzurufen, wobei das oder jedes Datenverbrauchersystem (16) geeignet ist, um die Integrität der ersten Daten (46) zu prüfen, indem ein neues Integritätsprüfungsresultat aus mindestens den ersten Daten (46) erstellt wird und indem das neue Integritätsprüfungsresultat mit dem Integritätsprüfungsresultat (48A), das von dem zweiten Datenerzeugungssystem (15) erstellt wird, verglichen wird.

12. Übertragungsverfahren für Luftfahrzeugdaten (12), umfassend die folgenden Schritte:
- Erstellen, zu aufeinanderfolgenden Zeitpunkten, von ersten Daten (46) durch ein erstes Datenerzeugungssystem (14);
- Erstellen, vorteilhafterweise zu aufeinanderfolgenden Zeitpunkten, von zweiten Daten (46A), die dazu bestimmt sind, mit den ersten Daten (46) identisch zu sein, durch ein zweites Datenerzeugungssystem (15), das redundant und vorzugsweise synchron mit dem ersten Datenerzeugungssystem (14) ist;
- Übertragen der ersten Daten (46) über eine Datenübertragungsverbindung (18) zwischen dem ersten Datenerzeugungssystem (14) und mindestens einem Datenverbrauchersystem (16);
- Empfangen und Nutzen der ersten Daten (46) durch mindestens ein Datenverbrauchersystem (16);
wobei mindestens eines von dem ersten Datenerzeugungssystem (14), dem zweiten Datenerzeugungssystem (15) und dem oder jedem Datenverbrauchersystem (16) an Bord eines Luftfahrzeugs (12) ist;
das Verfahren ferner umfassend die folgenden Schritte:
- Erarbeiten, durch das zweite Datenerzeugungssystem (15), eines Integritätsprüfungsresultats (48A) in Bezug auf die zweiten Daten (46A);
- Übertragen des Integritätsprüfungsresultats (48A) an das oder an jedes Datenverbrauchersystem (16);
- Abrufen, durch das oder jedes Datenverbrauchersystem (16), der ersten Daten (46), die von dem ersten Datenerzeugungssystem (14) übertragen werden, und des Integritätsprüfungsresultat (48A), das von dem zweiten Datenerzeugungssystem erarbeitet wird;
- Integritätsprüfung der ersten Daten (46) durch das oder jedes Datenverbrauchersystem (16), indem ein neues Integritätsprüfungsresultat anhand mindestens der ersten Daten (46) erstellt wird und dieses neue Resultat mit dem Integritätsprüfungsresultat (48A) verglichen wird, das vom zweiten Datenerzeugungssystem (15) erzeugt wird.

13. Verfahren nach Anspruch 12, wobei die ersten Daten (46), die von dem ersten Datenerzeugungssystem (14) erarbeitet werden, und das Integritätsprüfungsresultat (48A), das von dem zweiten Datenerzeugungssystem (15) erarbeitet wird, über die Datenübertragungsverbindung (18) übertragen werden, wobei die zweiten Daten (46A), die von dem zweiten Datenerzeugungssystem (15) erarbeitet werden, nicht direkt an das oder jedes Datenverbrauchersystem (16) übertragen werden, ohne das erste Datenerzeugungssystem (14) zu durchlaufen.

14. Verfahren nach Anspruch 13, wobei das erste Datenerzeugungssystem **(14)** bei jeder Datenerarbeitung eine Datenkapsel (40) erzeugt,
jede Datenkapsel (40) umfassend:
- eine Kennung (42) des Datenerzeugers, einen Auffrischungsindikator (44), der bei jeder Datenerstellung aktualisiert wird, möglicherweise ein Paket erster Funktionsdaten (46), das von dem ersten Datenerzeugungssystem (14) erarbeitet wird; und
- das Integritätsprüfungsresultat (48A) der Daten, die von dem zweiten Datenerzeugungssystem (15) erarbeitet werden,
das Verfahren umfassend das Abrufen, durch das oder jedes Datenverbrauchersystem (16), jeder Datenkapsel (40), um die Kennung (42), die Auffrischungsindikator (44), optional das Paket erster Funktionsdaten (46), das von dem ersten Datenerzeugungssystem (14) erarbeitet wird, sowie das Integritätsprüfungsresultat (48A), das von dem zweiten Datenerzeugungssystem (15) erarbeitet wird, zu extrahieren.

## Claims

1. A system for transfer of aircraft (12) data (10), comprising:
- a first data producer system (14) capable of producing first data (46) at successive moments;
- a second data producer system (15), redundant and preferably synchronous with the first data producer system (14), the second data producer system (15) being capable of producing second data (46A), intended to be identical to the first data (46), advantageously at successive moments;
- at least one data consumer system (16), capable of receiving and using the first data (46);
at least one of the first data producer system (14), the second data producer system (15) and the or each data consumer system (16) being on board an aircraft (12);
- a data transfer link (18) between the first data producer system (14) and the or each data consumer system (16), the first data producer system (14) being capable of transferring the first data (46) to the or each data consumer system (16) via the data transfer link (18)
the second data producer system (15) being capable of producing an integrity check result (48A) relating to at least the second data (46A), the integrity check result (48A) being intended to be transmitted to the or each data consumer system (16),
the or each data consumer system (16) being capable of retrieving the first data (46) transferred from the first data producer system (14) and the integrity check result (48A) produced by the second producer system, the or each data consumer system (16) being capable of checking the integrity of the first data (46) by establishing a new integrity check result from the first data (46) and by comparing the new integrity check result with the integrity check result (48A) produced by the second data producer system (15).

2. The transfer system (10) according to claim 1, wherein the second data producer system (15) is capable of transmitting the integrity check result (48A) relating to the second data (46A) to the first data producer system (14), wherein optionally, the first data producer system (14) is capable of transferring the integrity check result (48A) from the second data producer system (15) through the data transfer link (18).

3. The transfer system (10) according to claim 2, wherein the data transfer link (18) exclusively connects the first data producer system (14) to the or each data consumer system (16), with no data transfer link connecting the second data producer system (15) to the or each data consumer system (16).

4. The transfer system (10) according to any one of claims 2 to 3, wherein the second data producer system (15) is incapable of transferring the second data (46A) directly to the or each data consumer system (16) without passing through the first data producer system (14).

5. The transfer system (10) according to any one of the preceding claims, wherein the first data producer system (14) is capable of producing a data capsule (40), at each data production, with each data capsule (40) comprising:
- a data producer identifier (42), a refresh indicator (44) updated at each data production, possibly a first functional data packet (46), produced by the first data producer system (14); and
- the integrity check result (48A) of the data produced by the second data producer system (15),
the or each data consumer system (16) being capable of recovering each data capsule (40) to extract the identifier (42), the refresh indicator (44), possibly the first functional data packet (46), produced by the first data producer system (14) and the integrity check result (48A) produced by the second data producer system (15).

6. The transfer system (10) according to claim 5, in which the second data producer system (15) is capable of producing an data producer identifier (42A), at each data production, intended to be identical to the identifier (42) produced by the first data producer system (14), a refresh indicator (44A), varying at each data production, intended to be identical to the refresh indicator (44) produced by the first data producer system (14), the integrity check result (48A) being calculated from the data producer identifier (42A), the refresh indicator (44A) and possibly from second functional data (46A), produced by the second data producer system (15).

7. The transfer system (10) according to any one of claims 5 or 6, wherein the transfer link (18) implements a word-producing transfer protocol (50), each data capsule (40) being issued using a plurality of words (50A-50F).

8. The transfer system (10) according to any one of claims 5 to 7, wherein the plurality of words (50A to 50F) comprises at least one identification word (50A), comprising the identifier (42) and/or the refresh indicator (44), optionally at least one functional data word (50B to 50D) containing first functional data of the functional data packet (46), and at least one integrity check word (50E, 50F), containing the integrity check result (48A) produced by the second data producer system (15).

9. The transfer system (10) according to any one of claims 5 to 8, wherein the second data producer system (15) is capable of producing the integrity check result (48A) by adopting a memory representation (80) from the data to be distributed in the words (50A to 50F) intended to transfer the data capsule (40), the or each data consumer system (16) being capable of reconstituting the memory representation (80) produced by the data producer system (14) from the data recovered from the words (50A to 50F) of the data capsule (40).

10. The transfer system (10) according to any one of the preceding claims, wherein the integrity check result (48A) is a checksum or a cyclic redundancy code.

11. A data consumer system (16) intended to be used in a data transfer system (10) of an aircraft (12), the data transfer system (10) comprising a first data producer system (14), capable of producing first data (46) at successive moments and a second data producer system (15), redundant and preferably synchronous with the first data producer system (14), the second data producer system (15) capable of producing second data (46A), advantageously at successive moments, intended to be identical to the first data (46)
the or each data consumer system (16) being capable of recovering the first data (46) transferred from the first data producer system (14) and an integrity check result (48A) produced by the second producer system relating to the second data (46A), the or each data consumer system (16) being capable of checking the integrity of the first data (46), by establishing a new integrity check result from at least the first data (46) and by comparing the new integrity check result with the integrity check result (48A) produced by the second data producer system (15).

12. A method for transferring aircraft data (12) comprising the following steps:
- producing first data (46) at successive moments, via a first data producer system (14);
- producing second data (46A), advantageously at the successive moments, intended to be identical to the first data (46), via a second data producer system (15), redundant and preferably synchronous with the first data producer system (14);
- transferring the first data (46) via a data transfer link (18) between the first data producer system (14) and the or each data consumer system (16);
- receiving and using the first data (46) via the at least one data consumer system (16);
at least one of the first data producer system (14), the second data producer system (15), and the or each data consumer system (16) being on board an aircraft (12);
the process further comprising the following steps:
- producing an integrity check result (48A) for the second data (46A) via the second data producer system (15);
- transferring the integrity check result (48A) to the or each data consumer system (16);
- retrieving the first data (46) transferred from the first data producer system (14) and the integrity check result (48A) produced by the second data producer system (16) via the or each data consumer system (16);
- integrity checking the first data (46) via the or each data consumer system (16) by establishing a new integrity check result from at least the first data (46) and comparing the new integrity check result to the integrity check result (48A) produced by the second data producer system (15).

13. The method according to claim 12, wherein the first data (46) produced by the first data producer system (14) and the integrity check result (48A) produced by the second data producer system (15) are transmitted through the data transfer link (18), the second data (46A) produced by the second data producer system (15) being not transmitted directly to the or each data consumer system (16) without passing through the first data producer system (14).

14. The method according to claim 13, wherein the first data producer system (14) produces a data capsule (40), at each data production,
with each data capsule (40) comprising:
- a data producer identifier (42), a refresh indicator (44) updated at each data production, optionally a first functional data packet (46), produced by the first data producer system (14); and
- the data integrity check result (48A) produced by the second data producer system (15),
the method comprising the or each data consumer system (16) retrieving each data capsule (40) to extract the identifier (42), the refresh indicator (44), optionally the first functional data packet (46), produced by the first data producer system (14) and the integrity check result (48A) produced by the second data producer system (15).
